# EUROPÄISCHE PATENTSCHRIFT

(11) **EP 1 313 963 B1**
(45) Veröffentlichungstag und Bekanntmachung des Hinweises auf die Patenterteilung: **15.08.2007**
(21) Anmeldenummer: 01980295.8
(22) Anmeldetag: 29.08.2001
(51) Int. Cl.: F16D 33/16

(54) **Vefahren zur Steuerung der Leistungsaufnahme einer hydrodynamischen Kupplung durch Füllungsgradsteuerung und eine hydrodynamische Kupplung**
Method for controlling the power consumption of a hydrodynamic cllutch by controlling the volumetric efficiency and a hydrodynamic clutch
Procédé pour la commande de la puissance absorbée d'un embrayage hydrodynamique par commande du taux de remplissage et embrayage hydrodynamique

(30) Priorität: 30.08.2000 DE 10042865; 20.09.2000 DE 10046828
(43) Veröffentlichungstag der Anmeldung: 28.05.2003
(73) Patentinhaber: Voith Turbo GmbH & Co. KG, 89522 Heidenheim (DE)
(72) Erfinder: KLEMENT, Werner, 89520 Heidenheim (DE); VOGELSANG, Klaus, 74564 Crailsheim (DE); EDELMANN, Peter, 89518 Heidenheim (DE); HÖLLER, Heinz, 74564 Crailsheim (DE); FRIEDRICH, Jürgen, 74564 Crailsheim (DE); KERNCHEN, Reinhard, 74589 Satteldorf (DE); DIELE, Karl-Heinz, 74589 Satteldorf-Ellrichshausen (DE)
(74) Vertreter: Dr. Weitzel & Partner
(86) Internationale Anmeldenummer: PCT/EP2001/009934
(87) Internationale Veröffentlichungsnummer: WO 2002/018811

(56) Entgegenhaltungen:
- EP-A- 0 801 244
- DE-A- 3 721 402
- DE-A- 4 342 103
- DE-A- 19 901 296
- FR-A- 2 276 516
- US-A- 3 873 244

## Beschreibung

Die Erfindung betrifft ein Verfahren zur Steuerung der Leistungsaufnahme einer hydrodynamischen Kupplung, insbesondere als Anfahrelement in einem Antriebsstrang durch Füllungsgradsteuerung, im einzelnen mit den Merkmalen aus dem Oberbegriff des Anspruches 1; ferner eine hydrodynamische Kupplung, eine Verwendung derselben und eine Verwendung des Verfahrens.

Während des Anfahrvorganges, d.h. dem Hochlauf der Antriebsmaschine und gleichzeitiger Übertragung von Drehmoment auf den Abtrieb in einem Antriebsstrang, insbesondere in Fahrzeugen aber auch stationären Anlagen, steht zunehmend die Problematik des Energieverbrauches der Antriebsmaschine im Vordergrund, da dabei in der Regel zuwenig Energie für die Eigenbeschleunigung der Antriebsmaschine zur Verfügung steht. Als Anfahrelemente in Fahrzeugen finden dabei u.a. hydrodynamische Kupplungen Verwendung. Diese sind in einer Vielzahl von Ausführungen bekannt. Diesbezüglich wird auf das Druckwerk Voith: "Hydrodynamik in der Antriebstechnik", Vereinigte Fachverlage, Krausskopf Ingenieur Digest, Mainz 1987, verwiesen. In der Regel sind dabei die Anfahrelemente in einer Getriebebaueinheit integriert. Die Getriebebaueinheit weist dazu einen ersten hydrodynamischen Getriebeteil und einen weiteren zweiten Getriebeteil, welcher für den Einsatz in Fahrzeugen in der Regel vorzugsweise von einem mechanischen Getriebeteil gebildet wird, auf. Da die Leistungsaufnahme der hydrodynamischen Kupplung von deren Ausgestaltung selbst und nicht von einer, an diese wenigstens mittelbar auf der Abtriebsseite angeschlossenen Arbeitsmaschine abhängig ist, ist beim Einbau eines derartigen Elementes zwischen einer Antriebsmaschine und einer Arbeitsmaschine zu berücksichtigen, daß für jeden Belastungszustand zwischen der Arbeitsmaschine und der hydrodynamischen Kupplung auch ein Gleichgewichtszustand zwischen der Antriebsmaschine und dem hydrodynamischen Bauelement gegeben sein muss. Dabei steht die von der Antriebsmaschine abgegebene Leistung im seltensten Fall vollständig der Getriebebaueinheit, insbesondere dem hydrodynamischen Bauelement während des Anfahrvorganges zur Verfügung. Leistungen für Hilfsmaschinen, wie zum Beispiel Lüfter, Lichtmaschinen, Pumpen und so weiter, die vor dem Anfahrelement beziehungsweise dem Getriebeeingang angeordnet sind, müssen dabei von der zur Verfügung stehenden Antriebsleistung abgezogen werden. Wesentlich für die Verwendung eines hydrodynamischen Bauelementes in Form einer hydrodynamischen Kupplung für den Anfahrvorgang sind dabei die nachfolgend genannten Vorteile hydrodynamischer Leistungsübertragung: verschleißfrei sowie schwingungsdämpfend und thermisch stabil. Im Zusammenwirken mit Antriebsmaschinen für unterschiedliche Einsatzzwecke werden dabei an das Übertragungsverhalten auch während des Anfahrvorganges konkrete Anforderungen gestellt. Insbesondere für den Einsatz in Fahrzeugen ist während des Anfahrvorganges ein bestimmtes Verhalten, insbesondere eine bestimmte Leistungsaufnahme durch das Pumpenrad der hydrodynamischen Kupplung gewünscht, um die Antriebsmaschine in einem hinsichtlich eines bestimmten Parameters optimierten Betriebsbereiches fahren zu können. Während des Anfahrvorganges bei niedrigen Drehzahlen ist es dabei erforderlich, um einen möglichst entlasteten Motorhochlauf zu realisieren, das ein entsprechendes Überschussmoment zur Eigenbeschleunigung der Antriebsmaschine vorhanden ist.

FR-A-2 276 516 beschreibt ein Verfahren zum Steuern der Leistungsaufnahme einer hydrodynamischen Kupplung gemäß dem Oberbegriff von Anspruch 1. Dabei befindet sich das Betriebsmittel während des Betriebes der hydrodynamischen Kupplung nicht in einem geschlossenen Kreislauf. Vielmehr ist ein Schöpfrohr vorgesehen, was eine druckdichte Ausführung ausschließt. Ein Problem besteht hierbei in dem vollständigen Entleeren der Kupplung, da das Schöpfrohr nur bis zu einem gewissen Füllungsgrad wirksam ist.

Gleiches gilt für den Gegenstand, der in DE-A-43 42 103 offenbart ist. Auch hier liegt kein geschlossener externer Kreislauf vor. Außerdem wird hierbei kein statischer Überlagerungsdruck auf einen ruhenden Betriebsmittelspiegel aufgebracht.

Der Erfindung liegt daher die Aufgabe zugrunde, eine Anfahreinheit der eingangs genannten Art, insbesondere ein Verfahren zur Steuerung der Leistungsaufnahme derart weiterzuentwickeln, dass diese insbesondere für den Einsatz in Antriebssträngen von Fahrzeugen oder anderen Anwendungsbereichen geeignet sind, wobei neben den Vorteilen der hydrodynamischen Leistungsübertragung auch ein wesentlich entlasteterer Hochlauf der Antriebsmaschine gewährleistet werden sollte. Dabei soll sich die Ausführung der Anfahreinheit durch einen geringen konstruktiven, fertigungstechnischen und steuerungstechnischen Aufwand auszeichnen und kostengünstig sein. Des weiteren soll die erfindungsgemäße Lösung, unabhängig vom Einsatzgebiet am hydrodynamischen Bauelement, nur geringfügige Modifikationen erfordern.

Diese Aufgabe wird durch die Merkmale der selbständigen Ansprüche gelöst.

Erfindungsgemäß ist bei einem Verfahren zur Steuerung der Leistungsaufnahme eines Anfahrelementes in Form einer hydrodynamischen Kupplung, umfassend ein Pumpenrad und ein Turbinenrad, die miteinander wenigstens einen mit Betriebsmittel befüllbaren torusförmigen Arbeitsraum bilden, in einem Antriebsstrang mit mindestens noch einer, mit der hydrodynamischen Kupplung koppelbaren Antriebsmaschine, die Leistungsaufnahme in Abhängigkeit von deren Füllungsgrad frei einstellbar. Diese freie Einstellbarkeit ermöglicht es, hinsichtlich unterschiedlicher Kriterien, beispielsweise Energieverbrauch und Schadstoffemission, optimierte Betriebspunkte im Kennfeld der Antriebsmaschine anzusteuern.

Dabei erfolgt bei Vorliegen einer, die gewünschte aufzunehmende Leistung der hydrodynamischen Kupplung wenigstens mittelbar charakterisierenden Größe eine Änderung der Leistungsaufnahme durch die Steuerung des Füllungsgrades der hydrodynamischen Kupplung. Die Füllungsgradsteuerung erfolgt dabei vorzugsweise durch das Erzeugen und/oder Aufbringen eines Beeinflussungsdruckes auf ein ruhendes Medium, insbesondere den im Rahmen einer Betriebsmittelversorgungseinrichtung in einer Betriebsmittelspeichereinrichtung sich einstellenden Betriebsmittelspiegel oder einen Steuermittelspiegel. Dabei wird ein Teil des im Arbeitsraum befindlichen Betriebsmittels während des Betriebes der hydrodynamischen Kupplung in einem geschlossenen Kreislauf zwischen wenigstens einem Austritt aus dem torusförmigen Arbeitsraum zwischen Pumpenrad und Turbinenrad und wenigstens einem Eintritt in den torusförmigen Arbeitraum geführt, wobei der Eintritt mit einer gegenüber der Umgebung druckdicht geschlossenen Betriebsmittelspeichereinheit gekoppelt ist. Es wird dann eine Stellgröße zur Erzeugung eines Beeinflussungsdruckes auf das in der Betriebsmittelspeichereinheit ruhende Medium erzeugt und die Stelleinrichtung angesteuert. Die Befüllung oder Entleerung erfolgt bis zur Einstellung einer Druckwaage zwischen dem Betriebsmittelspiegel in der Betriebsmittelspeichereinrichtung und dem rotierenden geschlossenen Kreislauf.

Die vorrichtungsmäße Ausgestaltung der hydrodynamischen Kupplung ist in Anspruch 8 beschrieben.

Erfindungsgemäß umfaßt eine hydrodynamische Kupplung mindestens zwei rotierende Kreislaufteile in Form zweier Schaufelräder, welche miteinander mindestens einen torusförmigen Arbeitsraum bilden, der mit Betriebsmittel befüllbar ist und in welchem sich bei Betrieb der hydrodynamischen Kupplung ein rotierender Arbeitskreislauf einstellt. Dem torusförmigen Arbeitsraum ist ein Zulauf und ein Ablauf zugeordnet, der mit einem geschlossenen Kreislauf verbunden ist. Dieser umfaßt den Arbeitskreislauf und einen externen Teil, das heißt außerhalb des torusförmigen Arbeitsraumes geführten Teiles, der mit dem Arbeitskreislauf gekoppelt ist. Der externe Teil des Kreislaufes dient dabei unter anderem der Führung des Betriebsmittels zum Zweck der Kühlung. Erfindungsgemäß ist dieser geschlossene Kreislauf druckdicht ausgeführt. Dies bedeutet im einzelnen, daß der Zulauf, insbesondere der Zulaufraum zum Arbeitsraum und der Ablauf, insbesondere der Abströmraum gegenüber der hydrodynamischen Kupplung dicht ausgeführt sind und des weiteren die Betriebsmittelführungsstrecke zwischen dem Zulauf und dem Ablauf im externen Teil des geschlossenen Kreislaufes, d.h. außerhalb des torusförmigen Arbeitsraumes komplett abgedichtet ist.

Die erfindungsgemäße Lösung ermöglicht es, daß im Betrieb der hydrodynamischen Kupplung bei Abfuhr von Betriebsmittel aus dem Arbeitskreislauf in den externen Teil des geschlossenen Kreislaufes Betriebsmittel im externen Teil des Kreislaufes geführt wird und, da der Gesamtkreislauf geschlossen ausführt ist, dem Zulauf wieder zugeführt wird. Aufgrund der druckdichten Ausführung wird während des Betriebes der hydrodynamischen Kupplung, das heißt bei Rotation eines Schaufelrades und dadurch bedingt durch Mitnahme mittels dem Arbeitskreislauf mindestens eines weiteren Schaufelrades ein durch die hydrodynamische Kupplung selbsterzeugter Druck im geschlossenen System aufrecht erhalten. Dieser Kreislauf kann dabei für sich allein schon als Kühlkreislauf bezeichnet werden, da über die Leitungsverbindungen zwischen dem Ablauf und dem Zulauf Wärme durch Wärmestrahlung abgeführt werden kann. Es ist somit bereits mit dieser Ausführung ein Kühlkreislauf möglich.

Werden unter einem weiteren Aspekt Mittel zur Erzeugung eines Beeinflussungsdruckes auf das im geschlossenen Kreislauf geführte Betriebsmittel vorgesehen, besteht die Möglichkeit zusätzlich den Füllungsgrad der hydrodynamischen Kupplung zu steuern.

Unter einem weiteren Aspekt ist im geschlossenen Kreislauf mindestens eine Knotenstelle zum wahlweisen Anschluß von Mitteln zur Befüllung und/oder Entleerung und/oder Mitteln zur Druckvorgabe im System angeordnet. Die Mittel zur Druckvorgabe sind dabei vorzugsweise druckdicht an den geschlossenen Kreislauf angeschlossen und dienen der Erzeugung eine statischen Überlagerungsdruckes im geschlossenen Kreislauf. Vorzugsweise umfassen die Mittel zur Druckvorgabe einen druckdicht abgeschlossenen Behälter, welcher druckdicht mit dem geschlossenen Kreislauf verbunden ist. Die Druckvorgabe erfolgt dabei durch Aufbringen eines Druckes auf den Behälterspiegel. Eine andere Möglichkeit besteht in der Erzeugung eines Druckes durch zusätzliche Elemente, beispielsweise eine entsprechende Pumpeinrichtung.

Die Mittel zur Befüllung umfassen eine Betriebsmittelbehältereinrichtung und Mittel zum Betriebsmitteltransport, beispielsweise Pumpeinrichtungen. Diese dienen auch dem Verlustausgleich.

Unter einem weiteren Aspekt der Erfindung werden zur Vereinfachung des Gesamtsystems die Mittel zur Befüllung und Entleerung und die Mittel zur Druckvorgabe von einem System gebildet. Die Befüllung und Entleerung erfolgt dabei vorzugsweise ebenfalls über den druckdicht an das geschlossene System angeschlossenen Behälter und Ausübung eines Druckes auf den Behälterspiegel oder über Pumpeinrichtungen.

Eine Weiterentwicklung der Erfindung beinhaltet das Vorsehen beziehungsweise die Zuordnung von stehenden Staudruckrohren zum Abströmraum, welcher von einem mitrotierenden Gehäuseteil begrenzt wird. Vorzugsweise sind eine Mehrzahl von stehenden Staudruckrohren vorgesehen, welche im bestimmten Abstand zueinander in Umfangsrichtung angeordnet sind. Die Staudruckrohe fungieren beim Eintauchen in den Abströmraum als Staudruckpumpeinrichtung und sind mit den mit dem Abströmraum gekoppelten Leitungsverbindungen verbunden. Diese wandeln dabei die kinetische Energie in Druckenergie um und erzeugen so selbsttätig einen Kühlkreislauf, weicher zur Sicherstellung des Dauerbetriebes der hydrodynamischen Kupplung erforderlich ist. In einer weiteren Ausführung der erfindungsgemäßen Lösung sind im geschlossenen Kreislauf Mittel zur Wärmeabfuhr vorgesehen. Diese können dabei als Kühleinrichtungen oder Wärmetauscher ausgeführt sein.

Die erfindungsgemäß gestaltete hydrodynamische Kupplung als Anfahrelement ist hinsichtlich ihrer Einsatzmöglichkeiten in Antriebssträngen nicht auf eine konkrete Anwendung beschränkt. Die Anwendung kann in Antriebssträngen von stationären Anlagen oder mobilen Einrichtungen, vorzugsweise im Fahrzeug erfolgen.

Die erfindungsgemäße Lösung ist nachfolgend anhand von Figuren erläutert. Darin ist im einzelnen folgendes dargestellt:
- Figur 1: verdeutlicht eine vorteilhafte Ausführung eines erfindungsgemäß gestalteten Anfahrelementes in Form einer Turbokupplung anhand eines Ausschnittes aus einem Antriebsstrang;
- Figur 2: verdeutlicht anhand einer schematisierten Darstellung einer hydrodynamischen Kupplung und dem dieser zugeordneten Betriebsmittelversorgungssystem das Grundprinzip der Füllungsgradsteuerung.

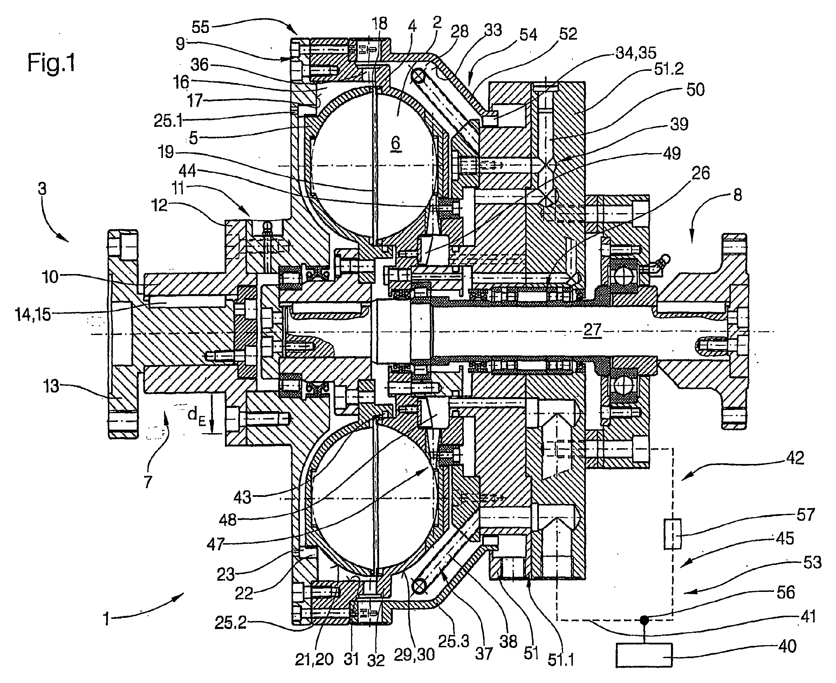

Die Figur 1 verdeutlicht eine vorteilhafte Ausführung eines erfindungsgemäß gestalteten Anfahrelementes 1 in Form einer hydrodynamischen Kupplung 2, insbesondere Turbokupplung anhand eines Ausschnittes aus einem Antriebsstrang 3. Die hydrodynamische Kupplung 2, insbesondere Turbokupplung umfaßt wenigstens ein als Pumpenrad 4 fungierendes Primärrad und ein als Turbinenrad 5 fungierendes Sekundärrad, welche miteinander einen torusförmigen Arbeitsraum 6 bilden. Das Anfahrelement 1 umfaßt des weiteren einen, mit einer hier nicht dargestellten Antriebsmaschine wenigstens mittelbar koppelbaren Antrieb 7 und einen mit dem Abtrieb am Antriebssystem wenigstens mittelbar, d.h. indirekt über weitere Übertragungsmittel oder direkt ohne Zwischenschaltung weiterer Übertragungsmittel, koppelbaren Abtrieb 8. Der Abtrieb 8 ist dabei beim Einsatz in Getrieben im allgemeinen mit einem mechanischen Drehzahl- und/oder Drehmomentumformer koppelbar. Der Antrieb 7 und der Abtrieb 8 werden dabei beispielsweise jeweils von einer Welle oder einer Hohlwelle oder einem Flansch gebildet: Die hydrodynamische Kupplung 2 weist des weiteren ein Gehäuse 9 auf, welches mit dem Pumpenrad 4 drehfest verbunden ist und aus Montagegründen vorzugsweise aus einer Mehrzahl von einzelnen Gehäuseteilen 25.1 - 25.3 besteht. Das Gehäuse 9 ist dazu ebenfalls drehfest mit dem Antrieb 7 gekoppelt. Im dargestellten Fall ist das Gehäuse 9 dazu mit einem Nabenelement 10 verbunden, welches an seinem zum Anfahrelement hingewandten Endbereich 11 flanschartig ausgestaltet ist, wobei die Befestigung bzw. die Realisierung der drehfesten Verbindung zwischen dem Nabenelement 10 und dem Gehäuse 9 im Bereich eines Flansches 12 am Nabenelement 10 erfolgt. Der Antrieb des Nabenelementes 10 erfolgt über eine Antriebswelle 13, welche wenigstens mittelbar, daß heißt entweder direkt oder über weitere Leistungsübertragungselemente mit einer hier nicht dargestellten Antriebsmaschine verbindbar ist und eine entsprechende Welle-Nabe-Verbindung 14, welche im dargestellten Fall als Paßfederverbindung 15 zwischen Nabenelement 10 und Antriebswelle 13 ausgeführt ist. Andere Ausführungsmöglichkeiten zur Realisierung einer drehfesten Verbindung sind ebenfalls denkbar. Das Gehäuse 9 umschließt in axialer Richtung das Turbinenrad 5 unter Bildung eines ersten Zwischenraumes 16. Der erste Zwischenraum 16 wird dabei durch eine Gehäuseinnenwand 17 eines Gehäuseteils 25.1, einen Austritt 18 aus dem Pumpenrad 4 im Bereich der Trennebene 19 zwischen Pumpenrad 4 und Turbinenrad 5, dem Außenumfang 20 im Bereich der radial äußeren Erstreckung 21 des Turbinenrades 5 und einen mit dem Pumpenrad 4 direkt drehfest verbundenen oder mit dem Pumpenrad eine bauliche Einheit bildenden weiteren Gehäuseteil 25.2, insbesondere dessen Innenfläche 31 begrenzt. Dabei sind Mittel 22 zur Abdichtung des Zwischenraumes 16 zwischen dem Gehäuse 9 und dem Turbinenrad 5 vorgesehen. Diese Mittel zur Abdichtung 22 umfassen mindestens eine berührungsfreie Dichteinrichtung 23, welche vorzugsweise in Form einer Labyrinthdichtung ausgeführt ist. Das Gehäuse 9 bildet des weiteren mit dem Pumpenrad 4 und einem weiteren, mit diesem drehfest gekoppelten Gehäuseteil 25.3 sowie einem zweiten mit Relativdrehzahl zum Gehäuse 9 rotierenden, vorzugsweise jedoch ruhenden Gehäuse 51, welches über eine Lageranordnung 26 auf einer den Abtrieb 8 des Anfahrelementes 1 bildenden Abtriebswelle 27 gelagert ist, einen weiteren zweiten Zwischenraum 28. Dieser wird im wesentlichen durch die Außenfläche 29 des Pumpenrades 4 im radial äußeren Bereich 30, dem die Gehäuseinnenwand 31 tragenden Gehäuseteil 25.2 und einer das Pumpenrad 4 in axialer Richtung wenigstens teilweise umschließenden Innenfläche 33 des Gehäuseteiles 25.3 des Gehäuses 9 gebildet. Das ruhende Gehäuse 51 kann einteilig oder aber mehrteilig ausgeführt sein. Es kann auch - in Abhängigkeit von der Anbindung an den Abtrieb 8 - mit Relativdrehzahl zur Rotation des Gehäuses 9 rotieren. Eine Abdichtung zwischen dem Gehäuseteil 25.3 und einem Gehäuseteil 51.1 des ruhenden Gehäuses 51, in welchem Leitungsverbindungen 41 zur Realisierung eines geschlossenen Betriebsmittelkreislaufes 42 integriert sind, erfolgt über Mittel 34 zur Abdichtung des Zwischenraumes 28 zwischen dem Gehäuse 9 und dem Gehäuse 51, insbesondere den Gehäuseteilen 25.3 und 51.1. Diese Mittel umfassen wenigstens eine berührungsfreie Dichtung 35, welche vorzugsweise in Form einer Labyrinthdichtung ausgeführt, ist. Der zweite Zwischenraum 28 ist über entsprechende Durchlaßöffnungen 36 in der Gehäusewand 32 am Gehäuseteil 25.2 mit dem ersten Zwischenraum 16 verbunden. Dem zweiten Zwischenraum 28 sind Mittel 37 zur Abfuhr von, im Betrieb der hydrodynamischen Kupplung durch die Betriebsmittelführung im torusförmigen Arbeitsraum 6 in den zweiten Zwischenraum 28 gelangten Betriebsmittel zugeordnet, welche beispielsweise in Form von Staudruckpumpen 38 ausgeführt sind. Entsprechend der gewünschten abzuführenden Menge an Betriebsmittel aus dem zweiten Zwischenraum 28 und des dazu zur Verfügung stehenden Zeitraumes sind vorzugsweise in Abhängigkeit des möglichen Strömungsquerschnittes, welcher durch die Dimensionierung der Staudruckpumpen 38 bereitstellbar ist, eine Mehrzahl von Staudruckpumpen 38 vorgesehen, welche vorzugsweise in gleichmäßigen Abständen in Umfangsrichtung im Zwischenraum 28 angeordnet sind bzw. in diesen eintauchen. Die Gehäuseteile 51.1 und 51.2 und der dritte Gehäuseteil 25.3 bilden dabei ein Staudruckpumpengehäuse 54, der Gehäuseteil 25.3 für sich allein die Pumpenradschale 52. Die Gehäuseteile 51.1 und 51.2 können auch als integrale Baueinheit ausgeführt sein, daß heißt es ist lediglich ein Gehäuseteil vorgesehen, welcher die in der Figur dargestellten Gehäuseteile 51.1 und 51.2 in sich vereinigt. Die Mittel zur Abfuhr 37, insbesondere die Staudruckpumpen 38 sind dabei mit Mitteln 39 zur Führung von Betriebsmittel in einem geschlossenen Kreislauf 42 verbunden. Die Mittel 39 zur Führung von Betriebsmittel umfassen dazu vorzugsweise Leitungsverbindungen 41 in Form von Betriebsmittelführungskanälen 50, welche in der dem Pumprad 4 zugewandten Gehäusewand bzw. den Gehäuseteilen 51.1 und 51.2 des Gehäuses 51 eingearbeitet sind. Das rotierende Gehäuse 25 und das ruhende oder mit relativer Drehzahl zum Gehäuse 25 rotierende Gehäuse 51 bilden das Gesamtgehäuse 55 der Kupplung 2. Das Betriebsmittelversorgungssystem 53 umfaßt eine Betriebsmittelspeichereinrichtung 40, welche mit dem geschlossenen Kreislauf 42 über eine Knotenstelle 56 verbunden ist, beispielsweise mittels einer Leitungsverbindung. Die Betriebsmittel-Speichereinrichtung 40 ist vorzugsweise im Bereich unterhalb der Höhe des torusförmigen Arbeitsraumes 6 angeordnet, insbesondere innerhalb der in Einbaulage äußeren radialen Abmessungen der einzelnen Schaufelräder 4 oder 5. Eine Sicherung über Syphon oder andere Hilfsmittel kann in diesem Fall entfallen.

Die Betriebsmittelspeichereinrichtung 40 ist dabei druckdicht mit dem Eintritt 44 in den torusförmigen Arbeitsraum 6 über die Knotenstelle 56 verbunden. Die Mittel zur Abdichtung 34 des Zwischenraumes 28, insbesondere des Staudruckpumpengehäuses 54 und der Pumpenradschale 52 sowie die Mittel 22 zur Abdichtung zwischen Turbinenrad 5 und dem rotierenden Gehäuse 9 der Anfahreinheit 1 sind räumlich oberhalb der Meridianmitte in Umfangsrichtung und unterhalb des maximalen Profildurchmessers der beiden Schaufelräder, das heißt des Pumpenrades 4 und des Turbinenrades 5 angeordnet. Des weiteren sind Mittel zur Abdichtung 43 zwischen Pumpenrad 4 und Turbinenrad 5 vorgesehen, wobei diese in radialer Richtung betrachtet unterhalb des inneren Durchmessers d_{E} des torusförmigen Arbeitsraumes 6 angeordnet sind. Der geschlossene Kreislauf 42 ist somit druckdicht gegenüber der Umgebung. Die Anbindung der Betriebsmittelspeichereinrichtung 40 erfolgt ebenfalls druckdicht an den geschlossenen Kreislauf 42.

Das Gehäuse der Anfahreinheit 9, das Pumpenrad 4, das Turbinenrad 5, der geschlossene Kreislauf 42 sowie die druckdichte Kopplung der Betriebsmittelspeichereinrichtung 40 mit dem geschlossenen Kreislauf 42 bilden Mittel 45 zur Erzeugung einer Druckwaage zwischen einem geschlossenen rotierenden Kreislauf 42 und einem ruhenden Medium. Der geschlossene Kreislauf 42 wird wischen dem Austritt 18 aus dem torusförmigen Arbeitsraum 6 im Bereich der Trennebene 19 und dem Eintritt 44 in das Pumpenrad 4 realisiert. Das Betriebsmittel gelangt vom Strömungskreislauf im torusförmigen Arbeitsraum 6 über die Austrittsöffnungen 18 im Bereich der Trennebene 19 des Pumpenrades 4 und des Turbinenrades 5 und die Verbindungskanäle in den zweiten Zwischenraum 28, von wo das Betriebsmittel über die Mittel zur Abfuhr 37, insbesondere die Staudruckpumpen 38 in den geschlossenen Kreislauf 42 geführt wird.

Der Eintritt 44 ist über die Befüllstelle 47 mit der Betriebsmittelspeichereinrichtung 40 verbunden. Die Befüllstelle 47 ist des weiteren in einer besonders vorteilhaften Ausführung als beschaufelte Fangrinne 48 ausgebildet. Dies bedeutet, daß Leitelemente 49, die sich in Strömungsrichtung in Richtung des torusförmigen Arbeitsraumes 6 erstrecken, vorgesehen sind. Die Abnahme des Betfiebsmittelstromes über die äußere, vom Gehäuseteil 25.3 gebildete Pumpenradschale 52 erfolgt vorzugsweise über eine Vielzahl von feststehenden Staudruckpumpen 38, welche in Umfangsrichtung vorzugsweise in gleichmäßigem Abstand zueinander angeordnet sind. Der zu Kühlzwecken erzeugte Kreislauf wird dabei als geschlossener Kreislauf 42 ausgeführt.

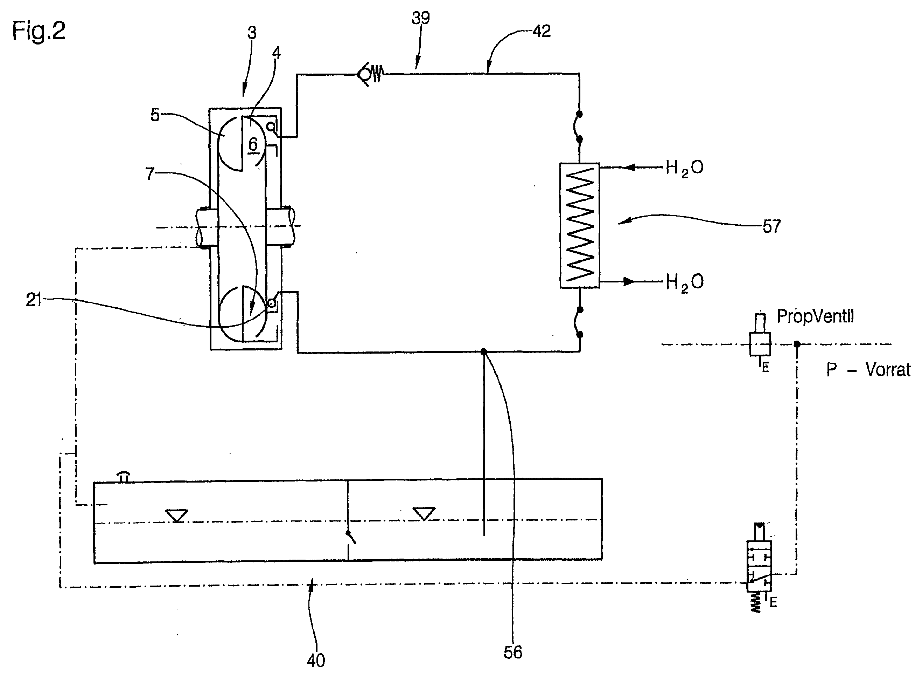

Die Funktionsweise der Füllungssteuerung mittels eines äußeren Druckes auf ein ruhendes Medium ist in schematisch vereinfachter Darstellung in der Figur 2 erläutert. Dieses verdeutlicht in schematisch vereinfachter Darstellung eine hydrodynamische Kupplung 2, den dieser zugeordneten geschlossenen Kreislauf 42, welcher als Kühlmittelkreis ausgeführt ist und die Kopplung zwischen der Turbokupplung 2 und der Betriebsmittel-Speichereinrichtung 40. Die Betriebsmittel-Speichereinrichtung 40 ist dabei beispielsweise als Tank oder Behälter ausgeführt, wobei dieser auch vom Gehäuse der Anfahreinheit oder des Getriebes, in welchem das Anfahrelement 1 angeordnet ist, gebildet werden kann. Die Betriebsmittel-Speichereinrichtung 40 ist dabei vorzugsweise unterhalb des inneren Durchmessers d_{E} des torusförmigen Arbeitsraumes 6 angeordnet. Entscheidend ist dabei, daß der Betriebsmittelspiegel sich, entweder unter dieser Abmessung befindet oder aber bei Vorhandensein entsprechender Hilfsmittel, beispielsweise in Form von Syphons und/oder Ventilen, auch höher liegen kann. Zwischen dem torusförmigen Arbeitsraum 6 bzw. dem Austritt 18 aus dem torusförmigen Arbeitsraum 6 und der Befüllstelle 47 des torusförmigen Arbeitsraumes 6 ist der geschlossene Kühlmittelkreislauf 42 ausgebildet. In diesem sind beispielsweise Mittel zur Wärmeabfuhr vom Betriebsmittel 57 angeordnet. Diese Mittel 57 umfassen im einfachsten Fall beispielsweise einen Wärmetauscher oder eine Kühleinrichtung. Die Führung des Betriebsmittels aus dem Arbeitsraum 6 in den Arbeitsraum 6 im geschlossenen Kreislauf 42 dient dabei hauptsächlich der Kühlung des Betriebsmittels, insbesondere der Erzeugung eines kontinuierlichen Kühlbetriebsmittelstromes. Das Betriebsmittelversorgungssystem umfaßt eine druckdicht ausgeführte Betriebsmittelspeichereinrichtung 40, beispielsweise in Form eines Betriebsmittelsumpfes in einem Behälter, Tank oder Gehäuse, welche über wenigstens einen Verbindungkanal mit dem geschlossenen Kreislauf 42 im Bereich des Eintrittes 44 koppelbar ist. Die Betriebsmittelspeichereinrichtung 40 ist dabei vorteilhafterweise derart angeordnet, daß der sich einstellende Betriebsmittelspiegel unterhalb des torusförmigen Arbeitsraumes 7 angeordnet ist. Auf den Betriebsmittelspiegel wird zur Änderung des Füllungsgrades FG ein Beeinflussungsdruck p_{B} aufgebracht, wobei dieser bei Einwirkung auf den geschlossenen Sumpf so lange Betriebsmittel in den Arbeitskreislauf im torusförmigen Arbeitsraum über Verbindungskanal einläßt, bis der Druck im Bereich des Eintrittes 21 nach dem Wärmetauscher ein Druckgleichgewicht herstellt. Die Befüllung oder Entleerung erfolgt bis zur Einstellung einer Druckwaage zwischen dem Betriebsmittelspiegel in der Betriebsmittelspeichereinrichtung und dem rotierenden geschlossenen Kreislauf.

Des weiteren sind die Profile des Turbinenrades 5 und des Pumpenrades 4 derart gegeneinander in radialer Richtung um eine bestimmte Größe a versetzt, daß der äußere Profildurchmesser des Turbinenrades 5 in radialer Richtung eine größere Abmessung aufweist als der äußere Profildurchmesser des Pumpenrades 4 und der Innenprofildurchmesser des Turbinenrades 5 ebenfalls eine größere Abmessung aufweist als der innere Durchmesser des Pumpenradprofiles.

Eine Veränderung der idealen torussymmetrischen Form kann des weiteren durch einen Profilversatz erfolgen.

Die Staudruckpumpen 38 liefern bei entleerter Turbokupplung 2, bei welcher alle Kreislaufteile betriebsmittelfrei sind, einen Volumenstrom und einen Öldruck als Kühlung oder Betätigung für andere Verbraucher, wie zum Beispiel eine nasslaufende mechanische Kupplung.

Weitere vorteilhafte Ausführungen bestehen darin, daß Mittel zur Verbesserung der Arbeitsraumbefüllung, das heißt der Pumpenkennlinie, durch Einbauten in den mit der Befüllstelle 47 verbundenen Befüllraum 48 vorgesehen werden. Diese Einbauten können als Füllschaufeln 49, Lochblechpakete oder ähnlich ausgeführte Teile ausgeführt sein. Des weiteren ist es denkbar, die Befüllung des Pumpenrades 4 durch mehrere Schaufelgitter an beliebiger Stelle des Toruses oder durch die Schaufel selbst zum Beispiel einen eingeprägten Kanal zur Torusmitte zu gestalten.

Weitere Verbesserungen können darin bestehen, daß die Beschaufelungen von Pumpenrad 4 und Turbinenrad 5 mit unterschiedlichen Schaufelwinkeln ausgeführt sind. Zusätzlich oder als einzelne Lösung können die Schaufeln von Pump- und Turbinenrad 4, 5 unterschiedlich angespitzt werden, was unterschiedliche Abmessungen über die Erstreckung in Umfangsrichtung der einzelnen Schaufel zur Folge hat. Eine andere Möglichkeit besteht darin, die Ein- und Austrittswinkel zwischen Pumpen- und Turbinenrad zu verändern oder eine unterschiedliche Anzahl von Schaufeln in der Beschaufelung von Pumpenrad 4 und Turbinenrad 5 vorzusehen.

### Bezugszeichenliste

- 1: Anfahrelement
- 2: Turbokupplung
- 3: Antriebsstrang
- 4: Pumpenrad
- 5: Turbinenrad
- 6: torusförmiger Arbeitsraum
- 7: Antrieb
- 8: Abtrieb
- 9: Gehäuse
- 10: Nabenelement
- 11: zum Anfahrelement hin gewandter Endbereich
- 12: Flansch
- 13: Antriebswelle
- 14: Welle-Nabe-Verbindung
- 15: Paßfederverbindung
- 16: Zwischenraum
- 17: Gehäuseinnenwand
- 18: Austritt
- 19: Trennebene
- 20: Außenumfang
- 21: radial äußere Erstreckung
- 22: Mittel zur Abdichtung
- 23: berührungsfreie Dichteinrichtung
- 25.1, 25.2, 25.3: Gehäuseteil
- 26: Lageranordnung
- 27: Abtriebswelle
- 28: Zwischenraum
- 29: Außenfläche
- 30: radial äußerer Bereich
- 31: Innenfläche
- 32: Gehäusewand
- 33: Innenfläche
- 34: Mittel zur Abdichtung des Zwischenraumes 28
- 35: berührungsfreie Dichtung
- 36: Durchlaßöffnung
- 37: Mittel zur Abfuhr von Betriebsmittel aus dem Arbeitsraum
- 38: Staudruckpumpe
- 39: Mittel zur Führung von Betriebsmittel
- 40: Betriebsmittel-Speichereinrichtung
- 41: Leitungsverbindungen
- 42: geschlossener Kreislauf
- 43: Mittel zur Abdichtung zwischen Pumpenrad und Turbinenrad
- 44: Eintritt
- 45: Mittel zur Erzeugung einer Druckwaage zwischen einem geschlossenen rotierenden Kreislauf und einem runden Medium
- 47: Befüllstelle
- 48: Befüllraum
- 49: beschaufelte Leitelemente
- 50: Betriebsmittelführungskanäle
- 51: ruhendes Gehäuse
- 52: Pumpenradschale
- 53: Betriebsmittelversorgungssystem
- 54: Staudruckpumpengehäuse
- 55: Gesamtgehäuse
- 56: Knotenstelle
- 57: Mittel zur Wärmeabfuhr
- d_{E}: innerer Durchmesser des torusförmigen Arbeitsraumes

## Patentansprüche

1. Verfahren zur Steuerung der Leistungsaufnahme eines Anfahrelementes (1) in Form einer hydrodynamischen Kupplung (2), umfassend ein Pumpenrad (4) und ein Turbinenrad (5), die miteinander wenigstens einen mit Betriebsmittel befüllbaren torusförmigen Arbeitsraum (6) bilden, in einem Antriebsstrang (3) mit mindestens noch einer, mit der hydrodynamischen Kupplung (2) koppelbaren Antriebsmaschine, bei welchem die Leistungsaufnahme als Funktion des Füllungsgrades der hydrodynamischen Kupplung (2) einstellbar ist
1.1 **gekennzeichnet durch** die folgenden Merkmale die Leistungsaufnahme ist zwischen Null und einem Maximaliwert frei einstellbar;
1.2 mindestens ein Teil des im Arbeitsraum (6) befindlichen Betriebsmittels wird während des Betriebes der hydrodynamischen Kupplung (2) in einem geschlossenen rotierenden Kreislauf (42) zwischen wenigstens einem Austritt (18) aus dem torusförmigen Arbeitsraum (6) zwischen Pumpenrad (4) und Turbinenrad (5) und wenigstens einem Eintritt (44) in den torusförmigen Arbeitraum (6) geführt;
1.3 die Beeinflussung der Zu- oder Abfuhr von Betriebsmittel zum Arbeitsraum (6) oder vom Arbeitsraum (6) erfolgt **durch** Erzeugung und Einbringung eines statischen Überlagerungsdruckes in den geschlossenen rotierenden Kreislauf;
1.4 das Betriebsmittel ist dem Arbeitsraum (6) über eine druckdicht mit dem Eintritt (44) in den torusförmigen Arbeitsraum (6) gekoppelten Betriebsmittelspeichereinheit (40) zu- und abführbar,
1.5 die Zu- und Abfuhr von Betriebsmittel zum Arbeitsraum (6) oder vom Arbeitsraum (6) erfolgt **durch** Aufbringen eines Überlagerungs- bzw. Beeinflussungsdruckes auf den Betriebsmittelspiegel der Betriebsmittelspeichereinheit (40).

2. Verfahren nach Anspruch 1, **dadurch gekennzeichnet, daß** bei Vorliegen einer, die gewünschte aufzunehmende Leistung der hydrodynamischen Kupplung (2) wenigstens mittelbar charakterisierenden Größe zur Änderung der aufnehmbaren Leistung der Füllungsgrad der hydrodynamischen Kupplung (2) gesteuert wird.

3. Verfahren nach Anspruch 1 oder 2, **dadurch gekennzeichnet, daß** bei Vorliegen einer, die gewünschte aufzunehmende Leistung der hydrodynamischen Kupplung (2) wenigstens mittelbar charakterisierenden Größe eine Stellgröße zur Erzeugung eines Beeinflussungsdruckes auf das in der Betriebsmittelspeichereinheit (40) ruhende Betriebsmittel erzeugt wird und eine zur Erzeugung des Beeinflussungsdruckes vorgesehene Stelleinrichtung angesteuert wird.

4. Verfahren nach Anspruch 3, **dadurch gekennzeichnet, daß** die Dauer des Füll- oder Entleervorganges durch die Zeitdauer zur Einstellung eines Druckgleichgewichtes zwischen dem in der Betriebsmittelspeichereinheit (40) vorliegenden Betriebsmittel und dem rotierenden geschlossenen Kreislauf (42) des Betriebsmittels charakterisiert ist

5. Verfahren nach einem der Ansprüche 3 oder 4, **dadurch gekennzeichnet, daß** die Füllung und/oder Entleerung einer Vollfüllung in einem Zeitraum von gleich oder kleiner 1s durchgeführt wird.

6. Verfahren nach einem der Ansprüche 3 bis 5, **dadurch gekennzeichnet, daß** der Beeinflussungsdruck in Abhängigkeit wenigstens einer der nachfolgend genannten Parameter steuerbar ist
- Drehzahl des Pumpenrades;
- Größe des Momentes am Pumpenrad;
- Größe des Momentes am Turbinenrad
- Drehzahl des Turbinenrades.

7. Verfahren nach einem der Ansprüche 3 bis 6, **dadurch gekennzeichnet, daß** die Größe des Teilstromes des während des Betriebes der hydrodynamischen Kupplung (2) im Arbeitsraum (6) befindlichen Betriebsmittels, welches in einem geschlossenen Kreislauf (42) zwischen wenigstens einem Austritt (18) aus dem torusförmigen Arbeitsraum (6) zwischen Pumpenrad (4) und Turbinenrad (5) und wenigstens einem Eintritt (44) in den torusförmigen Arbeitraum (6) geführt wird, unabhängig von einem Einfluß auf die Leistungsaufnahme in Abhängigkeit der Temperatur im Arbeitskreislauf im torusförmigen Arbeitsraum (6) gesteuert wird.

8. Verfahren nach einem der Ansprüche 1 - 7 zur Drehzahlregelung einer mit der hydrodynamischen Kupplung koppelbaren Antriebsmaschine in einem Antriebsstrang.

9. Hydrodynamische Kupplung (2) zur Durchführung des Verfahrens gemäß einem des Ansprüche 1 bis 8
9.1 mit einem Pumpenrad (4) und einem Turbinenrad (5), die miteinander wenigstens einen torusförmigen Arbeitsraum (6) bilden;
9.2 mit Mitteln zur Führung von Betriebsmittel in einem geschlossenen Kreislauf von wenigstens einer Austrittstelle (18) aus dem torusförmigen Arbeitsraum (6) in wenigstens einen Eintritt (44) des torusförmigen Arbeitsraumes (6);
9.3 der geschlossene Kreislauf (42) ist druckdicht ausgeführt.
9.4 mit einer Knotenstelle (56) im geschlossenen Kreislauf (42);
9.5 mit Mitteln zum wahlweisen Anschluß von Mitteln zur Befüllung und/oder Entleerung und/oder Mitteln zur Beeinflussung des Druckes des im geschlossenen Kreislauf (42) geführten Betriebsmittels an die Knotenstelle (56).

10. Hydrodynamische Kupplung (2) nach Anspruch 9, **gekennzeichnet durch** die folgenden Merkmale:
10.1 mit einem Betriebsmittelversorgungssystem (53), umfassend eine mit dem Eintritt (44) in den torusförmigen Arbeitsraum (6) verbundene Betriebsmittelspeichereinheit (40);
10.2 mit Mitteln zur druckdichten Verbindung zwischen der Betriebsmittelspeichereinheit (40) und den Eintrittstellen (44).

11. Hydrodynamische Kupplung (2) nach einem der Ansprüche 9 oder 10, **gekennzeichnet durch** die folgenden Merkmale:
11.1 mit einem drehfest mit dem Pumpenrad (4) gekoppelten Gehäuse (9);
11.2 das Gehäuse (9) umschließt in axialer Richtung das Turbinenrad (5) unter Bildung eines ersten Zwischenraumes (16);
11.3 der erste Zwischenraum (16) wird des weiteren vom Außenumfang des Turbinenrades (5) begrenzt, wobei zwischen Gehäuse (9) und Turbinenrad (5) eine berührungsfreie Dichtung (23) vorgesehen ist;
11.4 das Gehäuse (9) bildet mit einem ruhenden Gehäuseteil (51) einen weiteren zweiten Zwischenraum (28), in welchen Mittel (37) zur Abfuhr von Betriebsmittel aus der Pumpenradschale (52) eintauchen.

12. Hydrodynamische Kupplung nach Anspruch 11,**dadurch gekennzeichnet, daß** die Mittel (37) zur Abfuhr von Betriebsmittel mindestens eine feststehende Staudruckpumpeneinrichtung (38) umfassen.

13. Hydrodynamische Kupplung (2) nach einem der Ansprüche 10 oder 11, **gekennzeichnet durch** die folgenden Merkmale:
13.1 mit Mitteln zur Abdichtung des zweiten Zwischenraumes (28) zwischen dem Gehäuse (9) und dem runden Gehäuseteil (51);
13.2 mit Mitteln (43) zur Abdichtung zwischen dem Pumpenrad (4) und dem Turbinenrad (5) unterhalb des Innendurchmessers (d_{E}) des torusförmigen Arbeitsraumes (6).

14. Hydrodynamische Kupplung (2) nach einem der Ansprüche 9 bis 13, **gekennzeichnet durch** die folgenden Merkmale:
14.1 der Eintritt (44) ist über eine Befüllstelle (47) mit einem Befüllraum (48) gekoppelt;
14.2 die Befüllstelle (47) ist als beschaufelte Fangrinne (48), umfassend Leitelemente (49) ausgeführt

15. Hydrodynamische Kupplung (2) nach Anspruch 14, **dadurch gekennzeichnet, daß** die Leitelemente (49) sich in Strömungsrichtung in Richtung des torusförmigen Arbeitsraumes (6) erstrecken.

16. Hydrodynamische Kupplung (2) nach einem der Ansprüche 9 bis 15, **dadurch gekennzeichnet, daß** die Profile des Turbinenrades (5) und des Pumpenrades (4) in radialer Richtung um eine bestimmte Größe (a) versetzt sind.

17. Hydrodynamische Kupplung (2) nach Anspruch 16, **dadurch gekennzeichnet, daß** der äußere Profïldurchmesser des Turbinenrades (5) in radialer Richtung eine größere Abmessung als der äußere Profildurchmesser des Pumpenrades (4) aufweist und der innenprofildurchmesser des Turbinenrades (5) eine größere Abmessung als der Innenprofildurchmesser des Pumpenrades aufweist

18. Hydrodynamische Kupplung (2) nach einem der Ansprüche 9 bis 17, **dadurch gekennzeichnet, daß** der Eintritt (44) in den torusförmigen Arbeitsraum (6) am Pumpenrad (4) vorgesehen ist.

19. Hydrodynamische Kupplung (2) nach einem der Ansprüche 9 bis 17, **dadurch gekennzeichnet, daß** der Eintritt (44) in den torusförmigen Arbeitsraum (6) am Turbinenrad (5) angeordnet ist.

20. Hydrodynamische Kupplung (2) nach einem der Ansprüche 18 oder 19, **dadurch gekennzeichnet, daß** der Eintritt (44) in den torusförmigen Arbeitsraum durch die Beschaufelung erfolgt

21. Hydrodynamische Kupplung (2) nach einem der Ansprüche 18 bis 20, **dadurch gekennzeichnet, daß** die Befüllung des torusförmigen Arbeitsraumes (6) im Bereich statisch geringsten Druckes in den Arbeitsraum (6) erfolgt

22. Verwendung einer hydrodynamischen Kupplung gemäß einem der Ansprüche 9 bis 21 in einem Antriebsstrang mit einer Antriebsmaschine in Form eines Verbrennungsmotors oder eines Elektromotors.

23. Verwendung gemäß Anspruch 22 in einem Fahrzeug oder in einer stationären Anlage.

## Claims

1. A method for controlling the power input of a starting element (1) in the form of a hydrodynamic coupling (2), comprising a pump wheel (4) and a turbine wheel (5) which jointly form at least one toroidal working chamber (6) that can be filled with an operating medium, in a drive train (3) with at last one further engine which can be coupled with the hydrodynamic coupling (2) and in which the power input can be adjusted as a function of the degree of filling of the hydrodynamic coupling (2);
1.1 **characterized by** the following features:
the power input can be freely adjusted between zero and a maximum value;
1.2 at least a part of the operating medium situated in the working chamber (6) is guided during the operation of the hydrodynamic coupling (2) in a closed rotating circulation (42) between at least one outlet (18) from the toroidal working chamber (6) between the pump wheel (4) and turbine wheel (5) and at least one inlet (44) into the toroidal working chamber (6);
1.3 influencing the feeding of operating medium to the working chamber (6) and the discharging of the same from the working chamber (6) occurs by generating and introducing a static overlay pressure into the closed rotating circulation;
1.4 the operating medium can be supplied to and discharged from the working chamber (6) via an operating medium storage unit (40) which is coupled in pressure-tight manner with the inlet (44) into the toroidal working chamber (6);
1.5 the feeding of operating medium to the working chamber (6) and the discharging of the same from the working chamber (6) occurs by generating an overlay or influencing pressure on the operating medium level of the operating medium storage unit (40).

2. A method according to claim 1, **characterized in that** the degree of filling of the hydrodynamic coupling (2) is controlled in the presence of a variable for changing the absorbable output which characterizes the desired absorbable output of the hydrodynamic coupling (2) at least indirectly.

3. A method according to claim 1 or 2, **characterized in that** an actuating variable for generating an influencing pressure on the operating medium resting in the operating medium storage unit (40) is generated in the presence of a variable characterizing the desired absorbable output of the hydrodynamic coupling (2) at least indirectly and an actuating device provided for generating the influencing pressure is triggered.

4. A method according to claim 3, **characterized in that** the duration of the filling or discharging process is **characterized by** the duration for obtaining a pressure balance between the operating medium present in the operating medium storage unit (40) and the rotating closed circulation (42) of the operating medium.

5. A method according to one of the claims 3 or 4, **characterized in that** the filling and/or discharging of a full filling is performed in a period of equal to or less than 1 second.

6. A method according to one of the claims 3 to 5, **characterized in that** the influencing pressure can be controlled depending on at least one of the following parameters:
- speed of pump wheel;
- magnitude of moment on pump wheel;
- magnitude of moment on turbine wheel;
- speed of turbine wheel.

7. A method according to one of the claims 3 to 6, **characterized in that** the magnitude of the partial flow of the operating medium which is situated in the working chamber (6) during the operation of the hydrodynamic coupling (2) and is guided in a closed circulation (42) between at least one outlet (18) from the toroidal working chamber (6) between pump wheel (4) and turbine wheel (5) and at least one inlet (44) in the toroidal working chamber (6) is controlled independent of any influence of the power input depending on the temperature in the working circulation in the toroidal working chamber (6).

8. A method according to one of the claims 1 to 7 for controlling the speed of an engine in a drive train which can be coupled with the hydrodynamic coupling.

9. A hydrodynamic coupling (2) for performing the method according to one of the claims 1 to 8;
9.1 with a pump wheel (4) and a turbine wheel (5) which together form at least one toroidal working chamber (6);
9.2 with means for guiding operating medium in a closed circulation of at least one outlet point (18) from the toroidal working chamber (6) into at least one inlet (44) of the toroidal working chamber (6);
9.3 the closed circulation (42) is provided with a pressure-tight configuration;
9.4 with a node point (56) in the closed circulation (42);
9.5 with means for alternating connection of means for filling and/or discharging and/or means for influencing the pressure of the operating medium guided in the closed circulation (42) to the node point (56).

10. A hydrodynamic coupling (2) according to claim 9, **characterized by** the following features:
10.1 with an operating medium supply system (53), comprising an operating medium storage unit (40) which is linked with the inlet (44) into the toroidal working chamber (6);
10.2 with means for pressure-tight connection between the operating medium storage unit (40) and the inlet points (44).

11. A hydrodynamic coupling (2) according to one of the claims 9 or 10, **characterized by** the following features:
11.1 with a housing (9) which is torsionally rigidly connected with the pump wheel (4);
11.2 the housing (9) encloses in the axial direction the turbine wheel (5) by forming a first clearance (16);
11.3 the first clearance (16) is further delimited by the outside circumference of the turbine wheel (5), with a contactless gasket (23) being provided between housing (9) and turbine wheel (5);
11.4 the housing (9) forms with a static housing part (51) a further second clearance (28) into which immerse means (37) for discharging operating medium from the pump wheel shell (52).

12. A hydrodynamic coupling according to claim 11, **characterized in that** the means (37) for discharging operating medium comprise at least one fixed impact-pressure pumping device (38).

13. A hydrodynamic coupling (2) according to one of the claims 10 or 11, **characterized by** the following features:
13.1 with means for sealing the second clearance (28) between housing (9) and the round housing part (51);
13.2 with means (43) for sealing between the pump wheel (4) and the turbine wheel (5) beneath the inside diameter (d_{E}) of the toroidal working chamber (6).

14. A hydrodynamic coupling (2) according to one of the claims 9 to 13, **characterized by** the following features:
14.1 the inlet (44) is coupled with a filling chamber (48) via a filling point (47);
14.2 the filling point (47) is arranged as a bladed catching groove (48) comprising guide elements (49).

15. A hydrodynamic coupling (2) according to claim 14, **characterized in that** the guide elements (49) extend in the direction of flow in the direction of the toroidal working chamber (6).

16. A hydrodynamic coupling (2) according to one of the claims 9 to 15, **characterized in that** the profiles of the turbine wheel (5) and the pump wheel (4) are offset in the radial direction by a certain amount (a).

17. A hydrodynamic coupling (2) according to claim 16, **characterized in that** the outer profile diameter of the turbine wheel (5) has a larger diameter in the radial direction than the outside profile diameter of the pump wheel (4) and the inside profile diameter of the turbine wheel (5) has a larger diameter than the inside profile diameter of the pump wheel.

18. A hydrodynamic coupling (2) according to one of the claims 9 to 17, **characterized in that** the inlet (44) into the toroidal working chamber (6) is provided on the pump wheel (4).

19. A hydrodynamic coupling (2) according to one of the claims 9 to 17, **characterized in that** the inlet (44) into the toroidal working chamber (6) is provided on the turbine wheel (5).

20. A hydrodynamic coupling (2) according to one of the claims 18 or 19, **characterized in that** the inlet (44) into the toroidal working chamber occurs by the blading.

21. A hydrodynamic coupling (2) according to one of the claims 18 to 20, **characterized in that** the filling of the toroidal working chamber (6) occurs in the region of the statically lowest pressure into the working chamber (6).

22. The use of a hydrodynamic coupling according to one of the claims 9 to 21 in a drive train with an engine in the form of an internal combustion engine or an electromotor.

23. Use according to claim 22 in a vehicle or in a stationary unit.

## Revendications

1. Procédé de commande de la puissance absorbée d'un élément de démarrage (1) sous forme d'un coupleur hydrodynamique (2), du type comprenant une pompe (4) et une turbine (5) formant entre elles au moins une enceinte de travail (6) de forme torique apte à être remplie d'un fluide de travail dans un groupe motopropulseur (3) avec encore au moins une machine d'entraînement apte à être couplée au coupleur hydrodynamique (2), selon lequel la puissance absorbée est réglable en fonction du degré de remplissage du coupleur hydrodynamique (2),
1.1 **caractérisé par** les particularités suivantes :
la puissance absorbée est librement réglable entre zéro et une valeur maximale ;
1.2 une partie au moins du fluide de travail se trouvant dans l'enceinte de travail (6) circule pendant le fonctionnement du coupleur hydrodynamique (2) en circuit fermé tournant (42) entre au moins une sortie (18) de l'enceinte de travail (6) de forme torique située entre la pompe (4) et la turbine (5) et au moins une entrée (44) dans l'enceinte de travail (6) de forme torique ;
1.3 une influence étant exercée sur l'alimentation en fluide de travail de l'enceinte de travail (6) ou sur son évacuation de l'enceinte de travail (6) en générant une pression statique de surcharge et en introduisant celle-ci dans le circuit fermé tournant ;
1.4 le fluide de travail est apte à être amené dans l'enceinte de travail (6) et à en être évacué par l'intermédiaire d'une unité de stockage (40) du fluide de travail raccordée de manière étanche sous pression à l'entrée (44) dans l'enceinte de travail (6) de forme torique ;
1.5 l'acheminement de fluide de travail dans l'enceinte de travail (6) et son évacuation de l'enceinte de travail (6) s'opère par l'application d'une pression de surcharge ou d'influence sur le niveau du fluide de travail dans l'unité de stockage (40) de fluide de travail.

2. Procédé selon la revendication 1, **caractérisé en ce que**, pour modifier la puissance apte à être absorbée, le niveau de remplissage du coupleur hydrodynamique (2) est commandé en présence d'une grandeur caractérisant du moins indirectement la puissance du coupleur hydrodynamique (2) que l'on souhaite absorber.

3. Procédé selon la revendication 1 ou 2, **caractérisé en ce que**, en présence d'une grandeur caractérisant du moins indirectement la puissance du coupleur hydrodynamique (2) que l'on souhaite absorber, on produit une grandeur réglante destinée à générer une pression d'influence sur le fluide de travail reposant dans l'unité de stockage (40) de fluide de travail et qu'un système de réglage prévu pour générer la pression d'influence est actionné.

4. Procédé selon la revendication 3, **caractérisé en ce que** la durée du processus de remplissage ou de vidange est **caractérisée par** le temps nécessité pour régler l'équilibre de pression entre le fluide de travail contenu dans l'unité de stockage (40) du fluide de travail et le circuit fermé tournant (42) du fluide de travail.

5. Procédé selon l'une quelconque des revendications 3 ou 4, **caractérisé en ce que** le temps que nécessite le remplissage et/ou la vidange du volume total est égal ou inférieur à 1 s.

6. Procédé selon l'une quelconque des revendications 3 à 5, **caractérisé en ce que** la pression d'influence est commandable en fonction d'au moins un des paramètres suivants :
- régime de la pompe ;
- intensité du couple à la pompe ;
- intensité du couple à la turbine ;
- régime de la turbine.

7. Procédé selon l'une quelconque des revendications 3 à 6, **caractérisé en ce que** la quantité de flux partiel du fluide de travail se trouvant dans l'enceinte de travail (6) pendant le fonctionnement du coupleur hydrodynamique (2) et circulant en circuit fermé (42) entre au moins une sortie (18) de l'enceinte de travail (6) de forme torique située entre la pompe (4) et la turbine (5) et au moins une entrée (44) dans l'enceinte de travail (6) est commandée indépendamment d'une influence sur la puissance absorbée en fonction de la température dans le circuit de travail dans l'enceinte de travail (6) de forme torique.

8. Procédé selon l'une quelconque des revendications 1 à 7 pour régler le régime d'une machine d'entraînement apte à être couplée au coupleur hydrodynamique dans un groupe motopropulseur:

9. Coupleur hydrodynamique (2) pour la mise en oeuvre du procédé selon l'une quelconque des revendications 1 à 8,
9.1 avec une pompe (4) et une turbine (5) formant entre elles au moins une enceinte de travail (6) de forme torique ;
9.2 avec des moyens de circulation de fluide de travail en circuit fermé depuis au moins un endroit de sortie (18) de l'enceinte de travail (6) de forme torique vers au moins une entrée (44) de l'enceinte de travail (6) de forme torique ;
9.3 le circuit fermé (42) est réalisé de manière à être étanche sous pression ;
9.4 avec un noeud (56) dans le circuit fermé (42) ;
9.5 avec des moyens pour le raccordement optionnel au noeud (56) de moyens de remplissage et/ou de vidange et/ou de moyens destinés à influencer la pression du fluide de travail circulé en circuit fermé (42).

10. Coupleur hydrodynamique (2) selon la revendication 9, **caractérisé par** les particularités suivantes :
10.1 avec un système d'alimentation (53) en fluide de travail, comprenant une unité de stockage (40) de fluide de travail reliée à l'entrée (44) dans l'enceinte de travail (6) de forme torique ;
10.2 avec des moyens de liaison étanche sous pression entre l'unité de stockage (40) de fluide de travail et les endroits d'entrée (44).

11. Coupleur hydrodynamique (2) selon l'une quelconque des revendications 9 ou 10, **caractérisé par** les particularités suivantes :
11.1 avec un carter (9) solidarisé en rotation avec la pompe (4) ;
11.2 le carter (9) entoure la turbine (5) suivant la direction axiale en formant un premier espace (16) ;
11.3 le premier espace (16) est par ailleurs limité par le pourtour extérieur de la turbine (5), un joint (23) sans contact étant prévu entre le carter (9) et la turbine (5) ;
11.4 le carter (9) forme avec une partie immobile du carter (51) un autre deuxième espace (28) dans lequel plongent des moyens (37) d'évacuation du fluide de travail de la coque (52) de la pompe.

12. Coupleur hydrodynamique selon la revendication 11, **caractérisé en ce que** les moyens (37) d'évacuation du fluide de travail comprennent au moins un système de pompe à pression dynamique fixe (38).

13. Coupleur hydrodynamique (2) selon l'une quelconque des revendications 10 ou 11, **caractérisé par** les particularités suivantes :
13.1 avec des moyens d'étanchéification du deuxième espace (28) entre le carter (9) et la partie de carter ronde (51) ;
13.2 avec des moyens d'étanchéification (43) entre la pompe (4) et la turbine (5) en dessous du diamètre intérieur (d_{E}) de l'enceinte de travail (6) de forme torique.

14. Coupleur hydrodynamique (2) selon l'une quelconque des revendications 9 à 13, **caractérisé par** les particularités suivantes :
14.1 l'entrée (44) est raccordée à une enceinte de remplissage (48) par l'intermédiaire d'un endroit de remplissage (47) ;
14.2 l'endroit de remplissage (47) est conformé en forme de rigole (48) à aubes comprenant des éléments directeurs (49).

15. Coupleur hydrodynamique (2) selon la revendication 14, **caractérisé en ce que** les éléments directeurs (49) s'étendent en direction de l'enceinte de travail (6) de forme torique dans le sens de l'écoulement.

16. Coupleur hydrodynamique (2) selon l'une quelconque des revendications 9 à 15, **caractérisé en ce que** les profils de la turbine (5) et de la pompe (4) sont décalés d'une certaine valeur (a) suivant la direction radiale.

17. Coupleur hydrodynamique (2) selon la revendication 16, **caractérisé en ce que** le diamètre extérieur du profil de la turbine (5) est de plus grande dimension suivant la direction radiale que le diamètre extérieur du profil de la pompe (4) et que le diamètre intérieur du profil de la turbine (5) est de plus grande dimension que le diamètre intérieur du profil de la pompe.

18. Coupleur hydrodynamique (2) selon l'une quelconque des revendications 9 à 17, **caractérisé en ce que** l'entrée (44) dans l'enceinte de travail (6) de forme torique est prévue sur la pompe (4).

19. Coupleur hydrodynamique (2) selon l'une quelconque des revendications 9 à 17, **caractérisé en ce que** l'entrée (44) dans l'enceinte de travail (6) de forme torique est prévue sur la turbine (5).

20. Coupleur hydrodynamique (2) selon l'une quelconque des revendications 18 ou 19, **caractérisé en ce que** l'entrée (44) dans l'enceinte de travail de forme torique se fait par l'aubage.

21. Coupleur hydrodynamique (2) selon l'une quelconque des revendications 18 à 20, **caractérisé en ce que** le remplissage de l'enceinte de travail (6) de forme torique s'opère dans la zone de moindre pression statique dans l'enceinte de travail (6).

22. Utilisation d'un coupleur hydrodynamique selon l'une quelconque des revendications 9 à 21 dans un groupe motopropulseur avec une machine d'entraînement en forme de moteur à combustion interne ou de moteur électrique.

23. Utilisation selon la revendication 22 dans un véhicule ou dans une installation fixe.
